# EUROPÄISCHE PATENTSCHRIFT

(11) **EP 4 275 929 B1**
(45) Veröffentlichungstag und Bekanntmachung des Hinweises auf die Patenterteilung: **22.05.2024**
(21) Anmeldenummer: 23168702.1
(22) Anmeldetag: 19.04.2023
(51) Int. Cl.: B60G 21/05

(54) **VERBUNDLENKERACHSE**
TWIST BEAM AXLE
ESSIEU À TRAVERSE DÉFORMABLE

(30) Priorität: 12.05.2022 DE 102022111981
(43) Veröffentlichungstag der Anmeldung: 15.11.2023
(73) Patentinhaber: Benteler Automobiltechnik GmbH, 33102 Paderborn (DE)
(72) Erfinder: SCHNEIDER, Klaus, 34431 Marsberg (DE); SCHULTZ, Erik, 33102 Paderborn (DE); RUDI, Vitalis, 33104 Paderborn (DE); BÜRGER, Manfred, 33181 Bad Wünnenberg (DE)
(74) Vertreter: Ksoll, Peter

(56) Entgegenhaltungen:
- EP-A1- 2 327 573
- CN-A- 106 828 009
- CN-U- 208 978 585
- DE-A1-102014 107 896

## Beschreibung

Die Erfindung betrifft eine Verbundlenkerachse mit zwei rohrförmigen Seitenarmen, wobei stirnseitig an einem Endabschnitt eines rohrförmigen Seitenarms ein Radträgerflansch geschweißt ist.

Eine Verbundlenkerachse besteht vom grundsätzlichen Aufbau her aus zwei biege- und verdrehsteifen Seitenarmen und einem Querträger, welcher die beiden Seitenarme torsionsweich verbindet. Eine Verbundlenkerachse wird üblicherweise als Hinterachse für Fahrzeuge mit Frontantrieb eingesetzt und übernimmt die tragende Verbindung zwischen Rädern und Karosserie im Fahrwerksystem. An den Seitenarmen sind die Räder angebunden. Über die Verbundlenkerachse werden alle Kräfte und Momente zwischen Rad- und Fahrzeugaufbau übertragen. Die Radaufhängung ist dabei entscheidend für ein stabiles Fahrverhalten und die Fahrsicherheit.

Durch die DE 295 19 965 U1 zählt ein Kraftfahrzeug-Radträger für Mehrlenkerachsen zum Stand der Technik.

Eine vorteilhafte Ausgestaltung der Seitenarme zur Erzielung einer hohen Steifigkeit bei geringem Gewicht ist die Ausführung der Seitenarme in Rohrform mit direkter Anbindung eines Radträgerflansches.

Bei der aus der DE 10 2009 010 098 B4 bekannten Verbundlenkerachse ist stirnseitig an einen Endabschnitt, also vor das Ende eines rohrförmigen Seitenarms, ein Radträgerflansch geschweißt.

Die EP 2 327 573 A1 offenbart eine Verbundlenkerachse entsprechend den Merkmalen des Oberbegriffs des Anspruchs 1 und beschreibt einen Längslenker für die hintere Verbundlenkerachse eines Kraftfahrzeugs. Der Längslenker ist aus einer Metallplatte gebildet, die gebogen ist um eine Trichterform zu bilden und die längs entlang ihrer nach dem Biegen gegenüberliegenden Kanten verschweißt ist. Stirnseitig an einem Endabschnitt des Längslenkers ist ein Radträgerflansch geschweißt. Der Seitenarm weist in einem Wandabschnitt eine Öffnung auf.

Zum Stand der Technik zählt des Weiteren eine Verbundlenkerachse wie in der CN 106 828 009 A beschrieben. Auch diese Ausführungsform offenbart eine Verbundlenkerachse mit einem rohrförmigen Seitenarm und einem stirnseitig an einen Endabschnitt des Seitenarms angeschweißten Radträgerflansch, wobei in einem Wandabschnitt des Seitenarms eine Öffnung vorgesehen ist, durch welche Schraubverbindungsmittel führbar sind.

Zum technologischen Hintergrund zählen des Weiteren die CN 208 978 585 U und die DE 10 2014 107 896 A1.

Im System der Radaufhängung ist die Anbindung der Radlagereinheiten technisch anspruchsvoll. Insbesondere bei Radlagereinheiten mit Radlagern der sogenannten dritten Generation (Generation 3) ist die Schnittstelle zwischen dem Radträgerflansch und der Radlagereinheit wegen der komplexen Geometrien und Bauraumvorgaben nicht immer einfach zu realisieren. Radlager der Generation 3 besitzen am Außen- und am Innenring je einen Flansch für die Befestigung am Fahrwerk und für die Aufnahme von Bremsscheibe und Felge. Der radseitige Innenringflansch dient als Radnabe. Der Außenringflansch wird mit dem Radträger verschraubt. Hierbei ist die Zugänglichkeit der Montageöffnungen in den Flanschen erschwert. Die Anwendung von Radlagern der dritten Generation bei Verbundlenkerachsen erfordert daher üblicherweise einen aufgesetzten Radträgerflansch mit einem oder mehreren Verstärkungsbauteilen.

Der Erfindung liegt ausgehend vom Stand der Technik die Aufgabe zugrunde, eine Verbundlenkerachse zu schaffen mit einer funktional verbesserten Anbindung einer Radlagereinheit, insbesondere für die Montage eines Radlagers der dritten Generation.

Die Lösung dieser Aufgabe besteht in einer Verbundlenkerachse gemäß Anspruch 1.

Vorteilhafte Ausgestaltungen und Weiterbildungen der erfindungsgemäßen Verbundlenkerachse sind Gegenstand der abhängigen Ansprüche.

Ausgestaltungen und Modifikationen von Merkmalen der Verbundlenkerachse, die einzeln oder in Kombination die Erfindung technisch vorteilhaft ausgestalten, ergeben sich aus der Beschreibung und den beigefügten Zeichnungen.

Begriffe wie oben und unten, vorne und hinten, horizontal und vertikal oder Längsrichtung und Querrichtung sowie Oberseite und Unterseite beziehen sich auf die Einbaulage der Verbundlenkerachse, deren Bauteile und Anbaukomponenten in einem Kraftfahrzeug.

Eine Verbundlenkerachse umfasst im Wesentlichen zwei radführende Seitenarme, auch Längslenker genannt, und einen die beiden Seitenarme verbindenden Querträger. Jeweils stirnseitig an einem Ende bzw. stirnseitig an einem Endabschnitt eines Seitenarms ist ein Radträgerflansch angeschweißt.

Der Seitenarm weist in einem Wandabschnitt eine Öffnung auf, welche dazu eingerichtet und bestimmt ist, dass ein Schraubverbindungsmittel, insbesondere einen Gewindebolzen, über die Öffnung durch den Seitenarm bis zum Radträgerflansch und durch eine Durchgangsöffnung im Radträgerflansch führbar ist bzw. zur Montage und Festlegung einer Radlagereinheit geführt werden kann.

Die Öffnung im Seitenarm ermöglicht die Zugänglichkeit zu einer Montageöffnung im radträgerflanschseitigen feststehenden Flansch einer Radlagereinheit. Das Schraubverbindungsmittel kann durch die Öffnung im Wandabschnitt des Seitenarms und durch die offene Stirnseite des Endabschnitts des Seitenarms geführt werden. Das Schraubverbindungsmittel wird dann durch eine Durchgangsöffnung im Radträgerflansch geführt und in eine Montageöffnung im Außenringflansch der Lagereinheit geschraubt.

Die erfindungsgemäße Ausgestaltung schafft eine Verbundlenkerachse mit einer funktional vorteilhaften Anbindung einer Radlagereinheit, insbesondere einer Radlagereinheit mit einem Radlager der dritten Generation. Die erfindungsgemäße Verbundlenkerachse ermöglicht es, das Radlager bzw. die Lagereinheit mit dem Radträgerflansch durch den Seitenarm hindurch zu verschrauben. Dies ist insbesondere möglich, wenn ein Radlager mit Drei-Punkt-Verschraubung verwendet wird, wie dies bei den Radlagern der dritten Generation der Fall ist. Der feststehende Außenringflansch eines Radlagers der dritten Generation weist drei Montageöffnungen auf, die versetzt zueinander angeordnet sind. Die untere Montageöffnung wird so positioniert, dass deren Zugänglichkeit für ein Schraubverbindungsmittel von innen durch die Öffnung im Seitenarm und das stirnseitig offene Ende des Seitenarms gegeben ist.

Ein Seitenarm kann in seiner Längserstreckung bogenförmig verlaufen. Insbesondere ist der Endabschnitt des rohrförmigen Seitenarms bogenförmig ausgebildet. Hierbei ist der Endabschnitt bezogen auf die Einbaulage der Verbundlenkerachse in einem Kraftfahrzeug nach außen gerichtet. Die Öffnung ist in einem innenliegenden Wandabschnitt des Endabschnitts vorgesehen. Der innenliegende Wandabschnitt liegt auf der zum Querträger gerichteten Seite des Seitenarms. Der innenliegende Wandabschnitt des bogenförmigen Endabschnitts weist einen größeren Krümmungsradius auf als der außenliegende Wandabschnitt.

Eine hinsichtlich der Ausnutzung des Bauraums sowie des Steifigkeits- und Festigkeitsverhaltens vorteilhafte Ausgestaltung sieht vor, dass die Öffnung im Wandabschnitt des Seitenarms einen umlaufenden in sich geschlossenen Rand aufweist.

Die erfindungsgemäße Ausgestaltung der Verbundlenkerachse sieht vor, dass oberseitig des Seitenarms zwischen dem Endabschnitt und dem Radträgerflansch ein Verstärkungsbauteil angeordnet ist.

Das Verstärkungsbauteil ist als Blechformteil ausgeführt. Insbesondere ist das Verstärkungsbauteil ein schalenförmiges Blechformteil. Das Blechformteil stützt sich einerseits an der Oberseite des rohrförmigen Seitenarms und andererseits am Radträgerflansch ab. Insbesondere ist das Blechformteil stoffschlüssig mit dem Seitenarm und dem Radträgerflansch gefügt. Das Blechformteil weist erfindungsgemäß zumindest eine weitere Ausnehmung auf, wobei die Ausnehmung dazu eingerichtet und bestimmt ist, dass ein Schraubverbindungsmittel über die Ausnehmung durch das Blechformteil und durch eine Durchgangsöffnung im Radträgerflansch geführt werden kann. Insbesondere sind bei einer Radlagereinheit mit einem Außenringflansch mit einer Drei-Punkt-Verschraubung zwei Ausnehmungen im Blechformteil vorgesehen. Diese ermöglichen die Zugänglichkeit der beiden oberen Montageöffnungen im Außenringflansch der Radlagereinheit.

Vorzugsweise sind die Ausnehmungen am Außenrand des Blechformteils offen.

Möglich ist es auch, dass die Ausnehmungen im Verstärkungsbauteil randseitig umlaufend geschlossen sind.

In einem oder beiden rohrförmigen Seitenarmen der Verbundlenkerachse kann zumindest eine Einprägung oder Sicke vorgesehen sein. Insbesondere ist eine Einprägung in einem Seitenarm in einem Bereich vor der Öffnung im Seitenarm angeordnet, und zwar in einem Längenabschnitt des Seitenarms zwischen der Anbindung des Querträgers und der Öffnung, durch welche das Schraubverbindungsmittel durch den Seitenarm führbar ist. Die Einprägung bzw. Sicke verbessert das Steifigkeitsverhalten des Seitenarms, speziell im Hinblick auf die durch die Öffnung erzeugte Materialschwächung. Möglich ist es aber auch, dass Einprägungen als Freigang für weitere Bau- oder Anbaukomponenten der Radaufhängung dienen.

Eine die grundsätzliche Funktionalität der Verbundlenkerachse verbessernde Ausgestaltung sieht des Weiteren vor, dass ein Federteller im Zwickel zwischen dem Seitenarm und dem Querträger angeordnet ist. Der Federteller ist sowohl mit dem Seitenarm als auch mit dem Querträger zumindest bereichsweise verschweißt.

Die Erfindung ist nachfolgend anhand eines in den Zeichnungen dargestellten Ausführungsbeispiels näher beschrieben. Es zeigen:
- Figur 1: eine Verbundlenkerachse in einer perspektivischen Darstellung;
- Figur 2: einen Endabschnitt eines Seitenarms der Verbundlenkerachse mit am Radträgerflansch des Seitenarms montierter Radlagereinheit in einer Perspektive;
- Figur 3: eine Ansicht entsprechend der Darstellung von Figur 2 aus einer anderen Perspektive;
- Figur 4: eine rückseitige Ansicht auf den Endabschnitt eines Seitenarms und
- Figur 5: den Endabschnitt des Seitenarms mit montierter Radlagereinheit teilweise in geschnittener Darstellung.

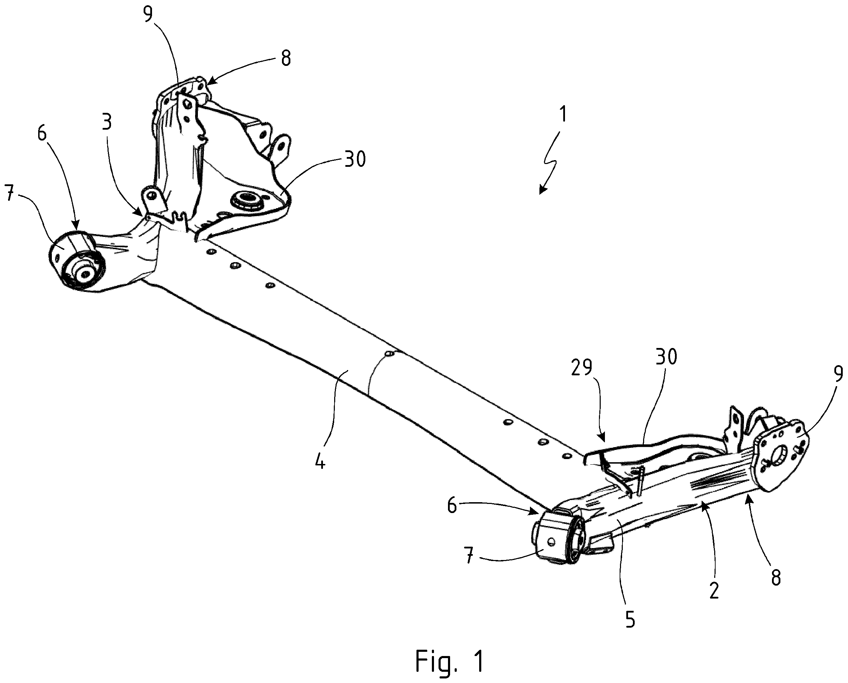

Die Figur 1 zeigt eine Verbundlenkerachse 1 für ein Kraftfahrzeug. Die Verbundlenkerachse 1 umfasst im Wesentlichen zwei radführende Seitenarme 2, 3 und einen die beiden Seitenarme 2, 3 verbindenden Querträger 4.

Die Seitenarme 2, 3 sind rohrförmig und besitzen einen aus einem Rohr gebildeten Grundkörper 5. In ihrer Längserstreckung verlaufen die Seitenarme 2, 3 bogenförmig gekrümmt. An einem vorderen Ende 6 weisen die Seitenarme 2, 3 jeweils eine Lagerbuchse 7 auf. Die Lagerbuchsen 7 dienen zur Aufnahme eines Gummimetalllagers, über welche eine schwenkbare Lagerung am Fahrzeugaufbau erfolgt.

An einem hinteren Endabschnitt 8 weist jeder Seitenarm 2, 3 einen Radträgerflansch 9 auf. Der Radträgerflansch 9 ist stirnseitig an den Endabschnitt 8 des rohrförmigen Seitenarms 2, 3 geschweißt.

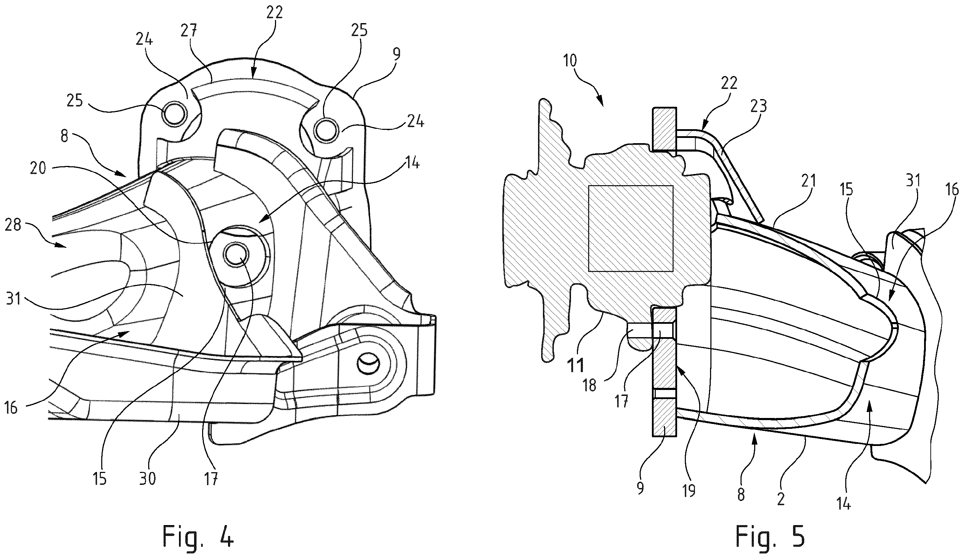

An einem Radträgerflansch 9 wird jeweils eine Radlagereinheit 10 festgelegt. Die Radlagereinheit 10 umfasst ein Radlager 11 der Generation 3. Die Radlagereinheit 10 ist in der Figur 5 technisch schematisiert dargestellt. Gleiches gilt für das Radlager 11.

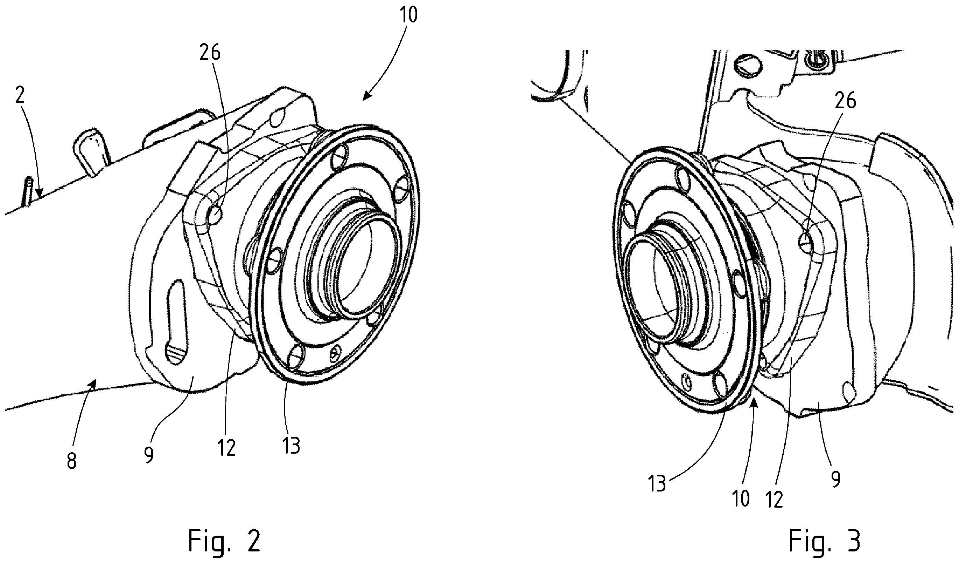

Wie insbesondere in den Figuren 2 und 3 zu erkennen, weist jede Radlagereinheit 10 einen radträgerflanschseitigen Außenringflansch 12 und einen radseitigen Innenringflansch 13 auf. Der Innenringflansch 13 dient als Radnabe. Der Außenringflansch 12 wird mit dem Radträgerflansch 9 verschraubt.

Anhand der Figuren 4 und 5 erkennt man, dass der Seitenarm 2, 3 in einem Wandabschnitt 14 eine Öffnung 15 aufweist. Der hintere Endabschnitt 8 ist bogenförmig ausgebildet. Die Öffnung 15 liegt auf der zur Fahrzeugmitte gerichteten innenliegenden Seite 16 des Seitenarms 2, 3. Die Öffnung 15 ist dazu eingerichtet und bestimmt, dass ein Schraubverbindungsmittel durch die Öffnung 15 und durch den Seitenarm 2, 3 bis zum Radträgerflansch 9 und dort durch eine Durchgangsöffnung 17 im Radträgerflansch 9 geführt werden kann, um in eine Gewindebohrung 18 des Außenringflanschs 12 der Radlagereinheit 10 eingeschraubt zu werden.

Durch die Öffnung 15 im Seitenarm 2, 3 ist die untere Gewindebohrung 18 im Außenringflansch 12 von der Rückseite her durch den Seitenarm 2, 3 und die Stirnseite 19 des Endabschnitt 8 zugänglich.

Die Öffnung 15 ist kreisrund und weist einen umlaufenden in sich geschlossenen Rand 20 auf.

Oberseitig des Seitenarms 2, 3 ist ein Verstärkungsbauteil 22 angeordnet. Das Verstärkungsbauteil 22 erstreckt sich zwischen dem Seitenarm 2, 3 und dem Radträgerflansch 9. Das Verstärkungsbauteil 22 ist ein Blechformteil 23, welches einerseits mit der Oberseite 21 des Seitenarms 2, 3 und andererseits mit dem Radträgerflansch 9 stoffschlüssig gefügt ist. Im Blechformteil 23 sind zwei Ausnehmungen 24 vorgesehen. Die Ausnehmungen 24 sind dazu eingerichtet und bestimmt, dass ein Schraubverbindungsmittel durch die Ausnehmungen 24 im Blechformteil 23 und durch jeweils eine obere Durchgangsöffnung 25 im Radträgerflansch 9 geführt werden kann. Jeweils mit einer Ausnehmung 24 korrespondiert eine Durchgangsöffnung 25 im Radträgerflansch 9. Eine Durchgangsöffnung 25 wiederum kommuniziert jeweils mit einer oberen Gewindebohrung 26 im Außenringflansch 12 der Radlagereinheit 10.

Wie insbesondere die Figuren 2 und 3 zeigen, ist der Außenringflansch 12 dreieckförmig konfiguriert und besitzt insgesamt drei Gewindebohrungen 18 bzw. 26, über welche die Festlegung der Radlagereinheit 10 am Radträgerflansch 9 erfolgt. Die untere Gewindebohrung 18 ist über die Öffnung 15 von der dem Radträgerflansch 9 abgewandten Seite des Seitenarms 2, 3 durch diesen zugänglich. Die Öffnung 15 ist so positioniert, dass ein Schraubverbindungsmittel, insbesondere ein Schraubbolzen, geradlinig von hinten durch den Seitenarm 2, 3 durch die Durchgangsöffnung 17 in die Gewindebohrung 18 führbar ist und eingeschraubt werden kann. Die beiden oberen Gewindebohrungen 26 im Radträgerflansch 9 sind über die Ausnehmungen 24 im Verstärkungsbauteil 22 zugänglich. Ein Schraubverbindungsmittel, insbesondere ein Schraubbolzen, kann von der Rückseite her durch die Durchgangsöffnung 25 im Radträgerflansch 9 geführt und in die Gewindebohrung 26 geschraubt werden.

Eine Ausnehmung 24 ist am Außenrand 27 des Blechformteils 23 offen ist.

Des Weiteren erkennt man insbesondere in den Figuren 4 und 5, dass jeder rohrförmige Seitenarm 2, 3 eine Einprägung 28 aufweist. Die Einprägung 28 ist innenseitig des Seitenarms 2, 3 vom Querträger 4 ausgehend vor der Öffnung 15 angeordnet.

In einem Zwickel 29 zwischen einem Seitenarm 2, 3 und dem Querträger 4 ist ein Federteller 30 vorgesehen. Der Federteller 30 ist mit dem Querträger 4 und mit einem Seitenarm 2, 3 gefügt. Hierbei umfasst ein Anbindungssteg 31 des Federtellers 30 den Endabschnitt 8 eines Seitenarms 2, 3 bereichsweise am innenliegenden Wandabschnitt 14. Der Anbindungssteg 31 befindet sich zwischen der Öffnung 15 und der Einprägung 28.

### Bezugszeichen:

- 1 -: Verbundlenkerachse
- 2 -: Seitenarm
- 3 -: Seitenarm
- 4 -: Querträger
- 5 -: Grundkörper
- 6 -: vorderes Ende der Seitenarme
- 7 -: Lagerbuchse
- 8 -: Endabschnitt der Seitenarme
- 9 -: Radträgerflansch
- 10 -: Radlagereinheit
- 11 -: Radlager
- 12 -: Außenringflansch
- 13 -: Innenringflansch
- 14 -: Wandabschnitt
- 15 -: Öffnung
- 16 -: innenliegende Seite des Seitenarms
- 17 -: Durchgangsöffnung
- 18 -: Gewindebohrung
- 19 -: Stirnseite
- 20 -: Rand
- 21 -: Oberseite
- 22 -: Verstärkungsbauteil
- 23 -: Blechformteil
- 24 -: Ausnehmungen
- 25 -: Durchgangsöffnung
- 26 -: Gewindebohrung
- 27 -: Außenrand
- 28 -: Einprägung
- 29 -: Zwickel
- 30 -: Federteller
- 31 -: Anbindungssteg

## Patentansprüche

1. Verbundlenkerachse mit zwei rohrförmigen Seitenarmen (2, 3), wobei stirnseitig an einen Endabschnitt (8) eines der zwei rohrförmigen Seitenarme (2, 3) ein Radträgerflansch (9) geschweißt ist und der Seitenarm (2, 3) in einem Wandabschnitt (14) eine Öffnung (15) aufweist, welche dazu eingerichtet und bestimmt ist, dass ein Schraubverbindungsmittel durch den Seitenarm (2, 3) und durch eine Durchgangsöffnung (17) im Radträgerflansch (9) führbar ist, **dadurch gekennzeichnet, dass** oberseitig des Seitenarms (2, 3) zwischen dem Endabschnitt (8) und dem Radträgerflansch (9) ein Verstärkungsbauteil (22) angeordnet ist, wobei das Verstärkungsbauteil (22) ein Blechformteil (23) ist, welches zumindest eine Ausnehmung (24) aufweist, wobei die Ausnehmung (24) dazu eingerichtet und bestimmt ist, dass ein Schraubverbindungsmittel durch das Blechformteil (23) und durch eine weitere Durchgangsöffnung (25) im Radträgerflansch (9) führbar ist.

2. Verbundlenkerachse nach Anspruch 1, **dadurch gekennzeichnet, dass** der Endabschnitt (8) bogenförmig ausgebildet ist und die Öffnung (15) in einem innenliegenden Wandabschnitt (14) des Endabschnitts (8) vorgesehen ist.

3. Verbundlenkerachse nach Anspruch 1 oder 2, **dadurch gekennzeichnet, dass** die Öffnung (15) einen umlaufenden in sich geschlossenen Rand (20) aufweist.

4. Verbundlenkerachse nach einem der Ansprüche 1 bis 3, **dadurch gekennzeichnet, dass** die Ausnehmung (24) am Außenrand (27) des Blechformteils (23) offen ist.

5. Verbundlenkerachse nach Anspruch 4, **dadurch gekennzeichnet, dass** die Ausnehmung im Verstärkungsbauteil randseitig umlaufend geschlossen ist.

6. Verbundlenkerachse nach einem der Ansprüche 1 bis 5, **dadurch gekennzeichnet, dass** der rohrförmige Seitenarm (2, 3) zumindest eine Einprägung (28) oder Sicke aufweist.

7. Verbundlenkerachse nach einem der Ansprüche 1 bis 6, **dadurch gekennzeichnet, dass** ein Federteller (30) in einem Zwickel (29) zwischen einem Seitenarm (2, 3) und einem Querträger (4) angeordnet ist.

## Claims

1. Twist beam axle with two tubular side arms (2, 3), wherein a wheel carrier flange (9) is welded at the end face to an end portion (8) of one of the two tubular side arms (2, 3), and the side arm (2, 3) has an opening (15) in a wall section (14), which opening is arranged and is intended for a screw connection means to be guided through the side arm (2, 3) and through a through-opening (17) in the wheel carrier flange (9), **characterized in that** a reinforcing component (22) is arranged on the upper side of the side arm (2, 3) between the end portion (8) and the wheel carrier flange (9), wherein the reinforcing component (22) is a sheet metal moulded part (23) which has at least one recess (24), wherein the recess (24) is configured and intended for a screw connection means to be guided through the sheet metal moulded part (23) and through a further through-opening (25) in the wheel carrier flange (9).

2. Twist beam axle according to claim 1, **characterized in that** the end portion (8) is arcuate and the opening (15) is provided in an inner wall section (14) of the end portion (8).

3. Twist beam axle according to claim 1 or 2, **characterized in that** the opening (15) has a circumferentially closed edge (20).

4. Twist beam axle according to any one of claims 1 to 3, **characterized in that** the recess (24) is open at the outer edge (27) of the sheet metal moulded part (23).

5. Twist beam axle according to claim 4, **characterized in that** the recess in the reinforcing component is closed circumferentially around the edge.

6. Twist beam axle according to any one of claims 1 to 5, **characterized in that** the tubular side arm (2, 3) has at least one embossing (28) or bead.

7. Twist beam axle according to any one of claims 1 to 6, **characterized in that** a spring plate (30) is arranged in a gusset (29) between a side arm (2, 3) and a cross member (4).

## Revendications

1. Essieu composite à bras oscillants comprenant deux bras latéraux tubulaires (2, 3), dans lequel côté frontal une bride de support de roue (9) est soudée sur une section d'extrémité (8) d'un des deux bras latéraux (2, 3) tubulaires et le bras latéral (2, 3) présente une ouverture (15) dans une section de paroi (14), qui est configurée et destinée à ce qu'un moyen de fixation de vis par le bras latéral (2, 3) peut être guidée à travers le bras latéral (2, 3) et à travers une ouverture de passage (17) dans la bride de support de roue (9), **caractérisé en ce que** sur le côté supérieur du bras latéral (2, 3) un élément de renforcement (22) est disposé entre la section d'extrémité (8) et la bride de support de roue (9), dans lequel l'élément de renforcement (22) est une pièce usinée en tôle (23), qui présente au moins un évidement (24), dans lequel l'évidement (24) est configuré et destiné à ce qu'un moyen de fixation de vis peut être guidé à travers la pièce usinée en tôle (23) et à travers une autre ouverture de passage (25) dans la bride de support de roue (9).

2. Essieu composite à bras oscillants selon la revendication 1, **caractérisé en ce que** la section d'extrémité (8) est conçue en forme d'arc et l'ouverture (15) est prévue dans une section de paroi intérieure (14) de la section d'extrémité (8).

3. Essieu composite à bras oscillants selon la revendication 1 ou 2, **caractérisé en ce que** l'ouverture (15) présente un bord (20) périphérique fermé sur lui-même.

4. Essieu composite à bras oscillants selon l'une quelconque des revendications 1 à 3, **caractérisé en ce que** l'évidement (24) est ouvert au niveau du bord extérieur (27) de la pièce usinée en tôle (23).

5. Essieu à bras oscillants selon la revendication 4, **caractérisé en ce que** l'évidement est fermé sur le pourtour côté bord dans l'élément de renforcement.

6. Essieu composite à bras oscillants selon l'une quelconque des revendications 1 à 5, **caractérisé en ce que** le bras latéral (2, 3) tubulaire présente au moins une empreinte (28) ou une moulure.

7. Essieu composite à bras oscillants selon l'une quelconque des revendications 1 à 6, **caractérisé en ce qu'**une coupelle de ressort (30) est disposée dans un gousset (29) entre un bras latéral (2, 3) et une barre transversale (4).
